# EUROPEAN PATENT SPECIFICATION

(11) **EP 0 972 312 B1**
(45) Date of publication and mention of the grant of the patent: **22.08.2001**
(21) Application number: 98920493.8
(22) Date of filing: 31.03.1998
(51) Int. Cl.: H01M 2/06

(54) **SEAL ASSEMBLY FOR A BATTERY TERMINAL**
DICHTUNSAUFBAU FÜR EINEN BATTERIEENDPOL
ENSEMBLE D'ETANCHEITE POUR L'ELECTROLYTE DE PILES ELECTRIQUES

(30) Priority: 01.04.1997 IT VI970051
(43) Date of publication of application: 19.01.2000
(73) Proprietor: Stocchiero, Olimpio, 36050 Montorso Vicentino (IT)
(72) Inventor: Stocchiero, Olimpio, 36050 Montorso Vicentino (IT)
(74) Representative: Bonini, Ercole
(86) International application number: EP9801873
(87) International publication number: WO9844575

(56) References cited:
- EP-A- 0 228 503
- WO-A-90/05999
- WO-A-94/13023
- WO-A-95/22178
- DE-U- 8 600 312
- US-A- 4 164 609

## Description

The invention concerns an improved sealing unit for electric batteries, which is particularly fit for preventing the blow-by of the electrolyte.

As it is known in the electric batteries the poles to which the external electric connections are connected, project from the cover, said poles being placed through the inside of holes which are made in the same cover.

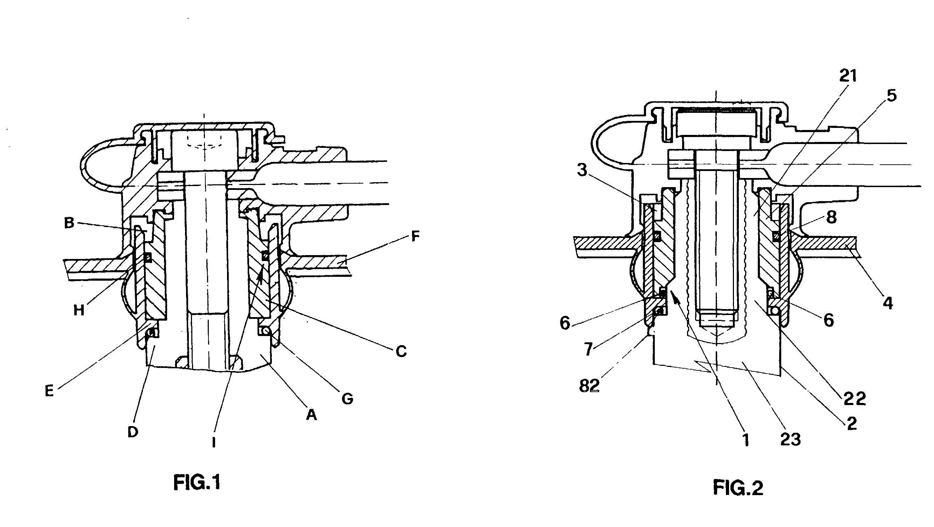

According to an embodiment of a known type which is shown in figure 1 in the enclosed drawings and relating to a pole of an improved type which is described in the Italian application VI94A000023 and in the corresponding PCT/EP95/00530 in the name of the same applicant of the present invention, the locking of each pole A in the respective hole B occurs through a tubular ring nut C which is placed in the interspace between the hole B and the pole A. Said tubular ring nut C locks them reciprocally through the interference which it realizes forcing an annular shoulder D. Said annular shoulder D is realized in the pole A against a corresponding shoulder E which is realized in the cover F, opposed to said shoulder E and projecting towards the inside of the hole B which is realized in the cover.

In order to realize the seal, a gasket G is placed between said shoulders whereas a further gasket H, housed in an annular housing I which is realized in the ring nut C, is placed between said ring nut C and the wall of the hole B.

It can be observed that each gasket realizes the seal against two opposed surfaces. Said opposed surfaces, as regards the gasket which is housed between said shoulders, are composed by two annular opposed and coaxial surfaces, one belonging to the pole and the other belonging to the cover whereas, as regards the gasket which is housed in the ring nut, said annular surfaces are composed by two annular concentric surfaces, one belonging to the lateral surface of the hole and the other belonging to the bottom surface of the annular housing which is realized in the ring nut.

Other realizations in which the gaskets are more than two and are placed in different positions, as regards those which have been described, are also known, but all of them present the peculiarity that the seal is realized always on two opposed surfaces, one belonging to the pole and the other to the cover, or one belonging to the ring nut and the other to the cover hole in which said ring nut is coupled, or also one belonging to the pole and the other to the ring nut.

In any case, moreover, the seal is assured by the shrinking through which said tubular ring nut, or a mechanically equivalent element, forces reciprocally said pole and said cover.

It has been found out that the seals which are realized this way do not always assure an adequate protection to the electric battery against the electrolyte outlet and that is the reason why the present invention is realized. Its aim is to improve, in the electric batteries, the seal against the electrolyte blow-by along the lateral surface of the poles.

The said object is attained thorugh the realization of an improved sealing unit for the electrolyte of electric batteries, said electric batteries including a container which is closed by means of a cover. Said cover is provided with annular elements circumscribing the holes which let the poles pass by and be coupled to the elements which are housed in said container. Said sealing unit, according to the main claim, includes a tubular ring nut which is coupled in the interspace existing between said pole and said hole, in which said pole is inserted and cooperating with at least a first sealing gasket, and is characterized in that said at least first sealing gasket is included between said pole, said cover and said ring nut, and realizes with them an annular sealing area preventing the electrolyte blow-by along the lateral surface of said poles, when said ring nut clamps said pole to said cover.

According to a preferred embodiment, said at least first gasket is composed by a gasket of the OR type which is housed in an annular housing, which is coaxial to said pole, presenting a triangular cross sectional shape being circumscribed by:
- the plain surface of an annular shoulder belonging to said cover and projecting radially towards the inside of said hole;
- the lateral surface of a depressed diameter area of said pole;
- the annular plain surface of a bevel which is realized at the end of said ring nut.

Connected with each said surface, said first gasket realizes an annular sealing surface so that three annular sealing surfaces are defined as a whole, one of which is connected with the ring nut, the other connected with the cover and still another connected with the pole.

Said ring nut presents in an intermediate position a conical annular surface which is coupled against a corresponding conical annular surface which is made in the pole. The axial position of said conical annular surfaces, when the ring nut is coupled to the pole, determines the interference degree through which said gasket forces said three surfaces wherewith it is in contact in order to realize the seal.

Advantageously the contact of said first gasket with all the three surfaces belonging to the cover at the same time, one to the pole and the other to the ring nut, determines a larger sealing degree which, as regards to the seals of a known type, is more reliable in order to prevent the electrolyte blow-by towards the outside of the electric battery. Still advantageously the seal of said first gasket can be completed by assembling further gaskets of the previously described type too.

The said object and advantages will be better pointed out during the description of a preferred embodiment of the invention which is given approximately but not restrictively and which is shown in the enclosed drawings where:
- fig. 1 shows an embodiment of the sealing devices belonging to the known techics;
- fig. 2 shows the improved sealing unit which is the subject of the invention;
- fig. 3 shows an enlarged representation of the improved sealing unit of the invention, seen from the sealing area;
- fig. 4 shows an enlargement of a detail of fig. 4 representation.

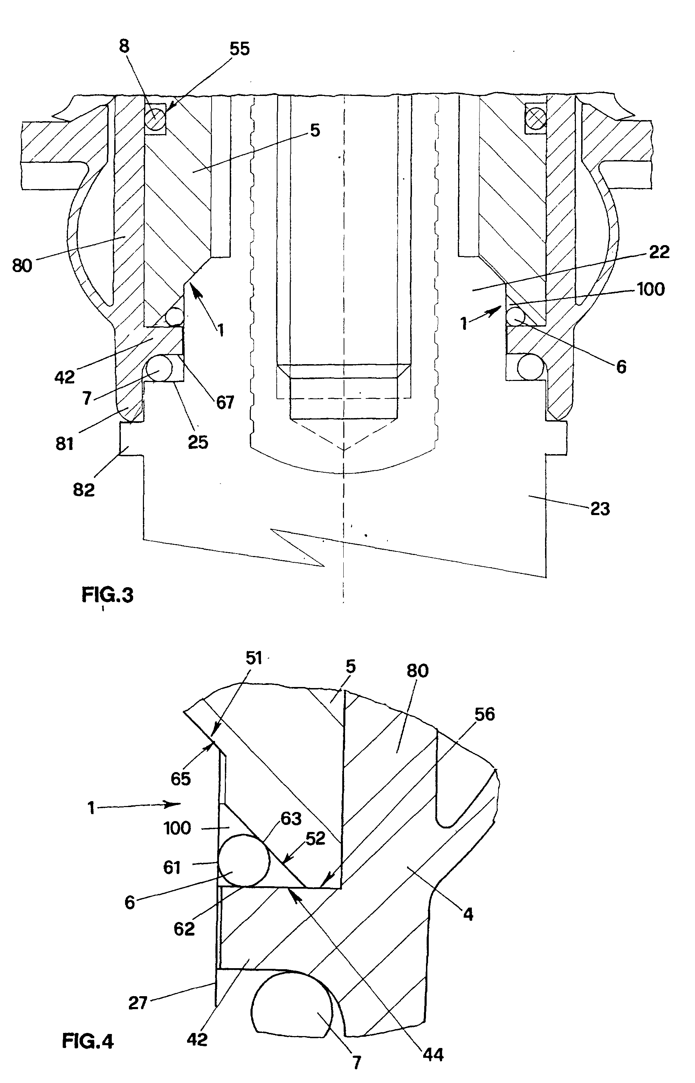

As it can be observed in fig 2 and more in detail in figs. 3 and 4, the improved sealing unit of the invention, referred to 1 as a whole, is applied to a pole 2, belonging to an electric battery which is not represented in figure, which is coupled in a hole 3 belonging to a closing cover 4 of the container wherein the elements composing the electric battery are contained.

Said improved unit of fig. 1, as it can be observed, is composed by a ring nut 5 which is fastened to said pole 2 connected with its terminal area 21 and which is placed inside the interspace existing between the pole two and the hole 3 wherein said pole is inserted.

The sealing unit, in addition to the tubular ring nut 5, includes also a gasket 6 of the OR type, which is visible in larger detail 9 in figs. 3 and 4. Said gasket 6, as it can be observed, realizes:
- a first sealing annular area 61 against the lateral surface 27 of the pole 2;
- a second sealing annular zone 62 against the plane annular surface 44 of an annular shoulder 42 of said cover 4, projecting radially towards the inside of said hole 3 which is made in the same cover 4;
- a third sealing annular area 63 which is realized against the plane annular surface 52 of a bevel which is realized at the end of the same ring nut 5.

Said surfaces 27, 44 and 52, by means of a reciprocal intersection, define an annular housing with a triangular transversal outline 100, in which the gasket 6 is housed.

It can also be observed that said ring nut 5 is provided in a intermediate position with a conical annular surface 51 cooperating with a corresponding opposed conical annular surface 65 belonging to the pole 2 and realized in its intermediate area 22. The reciprocal position of said conical annular surfaces 51 and 65 is such that it determines the seal against the acid blow-by and the compression ratio wherethrough said first gasket 6 interferes against the respective sealing areas 61, 62 and 63 in order to realize the seal, when the ring nut 5 clamps said pole 2 to said cover 4.

Moreover it can be onserved that the ring nut 5 too presents the annular surface 56, which is realized at its end, striking the plane annular surface 42 of said cover. So it is realized a further mechanic contact assuring, together with the mechanic contact which is realized between the conical annular surfaces 51 and 65 reciprocally cooperating, the seal maintenance against the electrolyte blow-by even when the absence or the damage of the gasket 6 are such that it cannot assure the seal.

Preferably the ring nut 5 and the terminal area 21 of the pole are threaded so that they realize reciprocally a screw coupling; however their coupling could occur through different systems too, for example a pressure one. In order to improve the total sealing effect of said first gasket 6, a second gasket 7 is housed between a radial shoulder 25 which is realized in the pole 2 connected with the plane dividing the larger diameter area 23 from the intermediate diameter area 22, and with the corresponding shoulder 42 of said cover 4.

Moreover the lower end 81 of the annular element 80 circumscribing the hole 3 wherein the pole 2 is inserted, strikes an annular projection 82 which is made in the area 23 whose diameter is larger than the same pole 2. In this way the compression ratio and therefore the entity of the gaskets 6 and 7 seal is determined by the relative position between the ring nut 5 and the annular element 80 as regards the pole 2. Said position is defined by the contrast respectively between the conical annular surface 65 of the pole and the annular element 80 end 81 as regards the annular shoulder 82 of the pole.

In order to improve further the total sealing effect, a third gasket 8 is placed inside an annular housing 55 which is realized in the ring nut 5. Said gasket 8 realizes the seal against the lateral surface of the hole 3 which is defined by the annular element 80 wherein the tubular bush 5 is inserted.

The presence of themechanic contacts between the surfaces 51 and 65, 56 and 44, 81 and 82, assures the seal even if one of the gasket 6 or 7 is damaged or however even if said gasket 6 and 7 cannot assure the seal against the electrolyte blow-by.

According to what has been described it can be understood therefore that the improved sealing unit which is the subject of the invention gives a better assurance against the blow-by of the electrolyte which is external to the battery.

## Claims

1. Sealing unit (1) for the electrolyte of electric batteries, said electric batteries including a container which is closed through a cover (4) which is provided with annular elements (80) circumscribing the holes (3) which let the poles (2) pass by and be coupled to the elements which are housed in said container, said sealing unit (1) including a tubular ring nut (5) which is coupled in the interspace existing between said pole (2) and said hole (3) in which said pole (2) is inserted and cooperates with at least a first sealing gasket (6), **characterized in that** said at least first sealing gasket (6) is included between said pole (2), said cover (4) and said ring nut (5) realizing three different annular sealing surfaces, one (61) sealing the pole (2), the other one sealing the plane annular surface (44) of the annular element (80), the third one sealing the ring nut (5), said first sealing gasket being housed in the annular housing defined by the lateral cylindrical surface (27) of said pole, by the plane annular surface (44) of said annular shoulder (42) and by the plane annular surface (52), said annular housing having a triangular transversal outline (100).

2. Sealing unit (1) according to claim 1 **characterized in that** said ring nut (5) presents in an intermediate position an annular conical surface (51) which is fit to be coupled by opposition against a corresponding annular conical surface (65) which is present in said pole (2), the opposition between said annular conical areas (51, 65) being fit to determine the reciprocal position between said ring nut (5) and said pole (2) in order to define the degree of interference of said at least first ring nut (6) connected with said annular sealing areas (61, 62, 63) which are fit to assure the seal against the blow-by of the electrolyte.

3. Sealing unit (1) according to claim 1 **characterized in that** said ring nut (5) presents in an intermediate position an annular conical surface (51) which is fit to be coupled by opposition against a corresponding annular conical surface (65) which is present in said pole (2), the contrast between said annular conical areas (51, 65) being fit to assure the seal against the blow-by of the electrolyte.

4. Sealing unit (1) according to claim 1 **chracterized in that** said ring nut (5) presents an annular surface (56) which is realized at its end and which strikes a corresponding plane annular surface (44) belonging to an annular shoulder (42) projecting radially towards the inside of said hole (3) which is made in said cover (4), the opposition between said surfaces (56, 44) being fit to assure the seal against the blow-by of the electrolyte.

5. Sealing unit (1) according to claim 1 **characterized in that** said pole (2) presents in an intermediate position a radial shoulder (25) which is connected with said further radial shoulder (42) which is present in said cover (4), a second gasket (7) being housed between said shoulders.

6. Sealing unit (1) according to claim 1 **characterized in that** each said annular elements (80) presents an end (81) which is mechanically opposed to an annular area (82) which projects radially and which is realized in the diametrally larger area (23) of said pole (2), said end being fit to determine the reciprocal position between said pole (2) and said cover (4).

7. Sealing unit (1) according to claim 1 **characterized in that** said ring nut (5) presents an annular seat (55) housing a third gasket (8) which is fit to realize the sealing opposition against the lateral surface of said hole (3) which is made in said cover (4).

8. Sealing unit (1) according to claim 1 or 5 or 7 **characterized in that** each said gasket (6, 7, 8) is a gasket of the OR type.

## Patentansprüche

1. Abdichteinheit (1) für die Füllsäure elektrischer Batterien, die ein Gehäuse umfassen, das durch einen Deckel (4) geschlossen ist, der mit ringförmigen Elementen (80) versehen ist, welche die Öffnungen (3) umschreiben, die die Pole (2) durchlassen und ihre Kupplung an die in diesem Gehäuse enthaltenen Elemente erlauben, wobei diese Abdichteinheit (1) eine röhrenförmige Ringmutter (5) umfasst, die im Zwischenraum zwischen dem Pol (2) und der Öffnung (3) befestigt ist, in welcher der Pol (2) eingesteckt ist, und die mit wenigstens einer ersten Dichtung (6) zusammenwirkt, **dadurch gekennzeichnet, dass** wenigstens eine erste Dichtung (6) zwischen dem Pol (2), dem Deckel (4) und der Ringmutter (5) vorhanden ist und drei verschiedene ringförmige Dichtflächen bildet, von denen eine (61) den Pol (2), die andere die ebene, ringförmige Fläche (44) des ringförmigen Elements (80) und die dritte die Ringmutter (5) abdichtet, wobei diese erste Dichtung in der ringförmigen Aufnahme enthalten ist, welche durch die seitliche, zylindrische Fläche (27) des Pols, durch die ebene, ringförmige Fläche (44) der ringförmigen Schulter (42) und durch die ebene ringförmige Fläche (52) definiert ist, wobei diese ringförmige Aufnahme einen dreieckigen Querumriss (100) hat.

2. Abdichteinheit (1) gemäß Patentanspruch 1, **dadurch gekennzeichnet, dass** die Ringmutter (5) in einer Zwischenposition eine ringförmige, konische Fläche (51) aufweist, die geeignet ist, durch Gegenwirken gegen eine entsprechende, ringförmige, konische Fläche (65) im Pol (2) gekuppelt zu werden, wobei das Gegenwirken zwischen diesen ringförmigen, konischen Bereichen (51, 65) geeignet ist, die wechselseitige Position der Ringmutter (5) und des Pols (2) zu bestimmen, um den Grad der Interferenz wenigstens der ersten Dichtung (6), die mit den ringförmigen Abdichtbereichen (61, 62, 63) verbunden ist, welche die Abdichtung gegen den Austritt der Füllsäure gewährleisten, zu definieren.

3. Abdichteinheit (1) gemäß Patentanspruch 1, **dadurch gekennzeichnet, dass** die Ringmutter (5) in einer Zwischenposition eine ringförmige, konische Fläche (51) aufweist, die geeignet ist, durch Gegenwirken gegen eine entsprechende, ringförmige, konische Fläche (65) in dem Pol (2) gekuppelt zu werden, wobei das Gegenwirken zwischen diesen ringförmigen, konischen Bereichen (51, 65) geeignet ist, die Abdichtung gegen den Austritt der Füllsäure zu gewährleisten.

4. Abdichteinheit (1) gemäß Patentanspruch 1, **dadurch gekennzeichnet, dass** die Ringmutter (5) eine ringförmige Fläche (56) aufweist, die sich an ihrem Ende befindet und die gegen eine entsprechende, ebene, ringförmige Fläche (44) schlägt, die zu einer ringförmigen Schulter (42) gehört, welche radial gegen das Innere der Öffnung (3) in dem Deckel (4) hervorsteht, wobei das Gegenwirken zwischen der Flächen (56, 44) geeignet ist, die Abdichtung gegen den Austritt der Füllsäure zu gewährleisten.

5. Abdichteinheit (1) gemäß Patentanspruch 1, **dadurch gekennzeichnet, dass** der Pol (2) in einer Zwischenposition eine radiale Schulter (25) aufweist, die mit der weiteren, radialen Schulter (42) in dem Deckel (4) verbunden ist, wobei zwischen den beiden Schultern eine zweite Dichtung (7) eingefügt ist.

6. Abdichteinheit (1) gemäß Patentanspruch 1, **dadurch gekennzeichnet, dass** jedes der ringförmigen Elemente (80) ein Ende aufweist, das mechanisch einem ringförmigen Bereich (82) entgegengesetzt ist, der radial hervorsteht und in dem Bereich mit größerem Durchmesser (23) des Pols (2) befindlich ist, wobei dieses Ende geeignet ist, die wechselseitige Position des Pols (2) und des Deckels (4) zu bestimmen.

7. Abdichteinheit (1) gemäß Patentanspruch 1, **dadurch gekennzeichnet, dass** die Ringmutter (5) eine ringförmige Aufnahme (55) aufweist, die eine dritte Dichtung (8) aufnimmt, welche das abdichtende Gegenwirken gegen die Seitenfläche der Öffnung (3) in dem Deckel (4) bewirkt.

8. Abdichteinheit (1) gemäß Patentanspruch 1 oder 5 oder 7, **dadurch gekennzeichnet, dass** jede Dichtung (6, 7, 8) eine Dichtung vom Typ O-Ring ist.

## Revendications

1. Une unité d'étanchéité (1) pour l'électrolyte d'accumulateurs électriques, lesdits accumulateurs électriques comprenant un boîtier qui est fermé au moyen d'un couvercle (4) qui est équipé d'éléments annulaires (80) autour des trous (3) qui permettent aux pôles de passer et d'être couplés aux éléments qui sont logés dans ledit boîtier, ladite unité d'étanchéité (1) comprenant un embout tubulaire (5) qui est couplé dans l'espace vide existant entre ledit pôle (2) et ledit pôle (3) dans lequel ledit pôle (2) est inséré et intéragit avec au moins un premier joint d'étanchéité (6), **caractérisée en ce** que ledit au moins premier joint d'étanchéité (6) est compris entre ledit pôle (2), ledit couvercle (4) et ledit embout (5) en réalisant trois surfaces d'étanchéité différentes, l'une (61) fermant hermétiquement le pôle (2), l'autre fermant hermétiquement la surface annulaire plane (44) de l'élément annulaire (80), la troisième fermant hermétiquement l'embout (5), ledit premier joint d'étanchéité étant positionné dans le logement annulaire défini par la surface cylindrique latérale (27) dudit pôle, par la surface annulaire plane (44) dudit épaulement annulaire (42) et par la surface annulaire plane (52), ledit logement annulaire ayant un profil transversal triangulaire (100).

2. Une unité d'étanchéité (1) selon la revendication 1 **caractérisée en ce** que ledit embout (5) présente en une position intermédiaire une surface conique annulaire (51) qui est indiqué pour être couplée par opposition contre une surface conique annulaire correspondante (65) qui est présente dans ledit pôle (2), l'opposition entre lesdites zones coniques annulaires (51, 65) étant indiquée pour déterminer la position réciproque entre ledit embout (5) et ledit pôle (2) de manière à définir le degré d'interférence dudit au moins premier joint d'étanchéité (6) relié auxdites zones d'étanchéité annulaires (61, 62, 63) qui sont indiquées pour garantir l'étanchéité contre la fuite de l'électrolyte.

3. Une unité d'étanchéité (1) selon la revendication 1 **caractérisée en ce que** ledit embout (5) présente en une position intermédiaire une surface conique annulaire (51) qui est indiquée pour être couplée par opposition contre une surface conique annulaire correspondante (65) qui est présente dans ledit pôle (2), le contraste entre lesdites zones coniques annulaires (51, 65) étant indiqué pour garantir l'étanchéité contre la fuite de l'électrolyte.

4. Une unité d'étanchéité (1) selon la revendication 1 **caractérisée en ce que** ledit embout (5) présente une surface annulaire (56) qui est réalisée à l'extrémité de celle-ci et qui touche une surface annulaire plane correspondante (44) appartenant à un épaulement annulaire (42) qui saille d'une manière radiale vers la partie interne dudit trou (3) qui se trouve sur ledit couvercle (4), l'opposition entre lesdites surfaces (56, 44) étant indiquée pour garantir l'étanchéité contre la fuite de l'électrolyte.

5. Une unité d'étanchéité (1) selon la revendication 1 **caractérisée en ce que** ledit pôle (2) présente en une position intermédiaire un épaulement radial (25) qui est relié audit ultérieur épaulement radial (42) qui est présent sur ledit couvercle (4), un deuxième joint (7) étant logé entre lesdits épaulements.

6. Une unité d'étanchéité (1) selon la revendication 1 **caractérisée en ce que** chacun desdits éléments annulaires (80) présente une extrémité (81) qui est opposée mécaniquement à une zone annulaire (82) qui saille d'une manière radiale et qui est réalisée dans la zone ayant le diamètre plus grand (23) dudit pôle (2), ladite extrémité étant indiquée pour déterminer la position réciproque entre ledit pôle (2) et ledit couvercle (4).

7. Une unité d'étanchéité (1) selon la revendication 1 **caractérisée en ce que** ledit embout (5) présente un siège annulaire (55) logeant un troisième joint (8) qui est indiqué pour réaliser l'opposition d'étanchéité contre la surface latérale dudit trou (3) qui se trouve sur ledit couvercle (4).

8. Une unité d'étanchéité (1) selon la revendication 1 ou 5 ou 7 **caractérisée en ce que** chacun desdits joints (6, 7, 8) est un joint de type OR.
